(19) Europäisches Patentamt
European Patent Office
Office européen des brevets

(11) **EP 3 882 225 A1**

(12) **EUROPEAN PATENT APPLICATION**
published in accordance with Art. 153(4) EPC

(43) Date of publication:
22.09.2021 Bulletin 2021/38

(51) Int Cl.:
*C03C 23/00* (2006.01)   *C03B 33/095* (2006.01)

(21) Application number: 19900981.2

(22) Date of filing: 18.12.2019

(86) International application number:
PCT/JP2019/049560

(87) International publication number:
WO 2020/130022 (25.06.2020 Gazette 2020/26)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 18.12.2018 KR 20180163696

(71) Applicant: Nipro Corporation
Osaka-shi, Osaka 531-8510 (JP)

(72) Inventors:
• KANG Hyoung Shik
  Hwaseong-si Gyeonggi-do (KR)
• MIYAMOTO Kimio
  Izumisano-shi, Osaka 598-0048 (JP)
• SANO Kazuhiko
  Osaka-shi, Osaka 531-8510 (JP)

(74) Representative: Forresters IP LLP
Skygarden
Erika-Mann-Straße 11
80636 München (DE)

(54) **DAMAGING PROCESS DEVICE AND METHOD FOR CLEAVAGE SITE USED FOR CUTTING MEDICAL GLASS PRODUCT**

(57)   A cutting part damage apparatus for a medical glass product according to an embodiment of the present invention is a laser light source for bursting ultra-fast laser beam, a beam profile forming section such that the ultra-fast laser beam has a plurality of focal lengths and is shaped to have an elongated profile, a beam irradiation section for irradiating the glass of the medical glass product so that the profile of the shaped ultra-fast laser beam is formed inside the glass of the medical glass product to form inside damage formed by internal defects due to bulk deformation inside the glass of the medical glass product, and a rotating section for rotating the medical glass product at a predetermined rotational speed. Therefore, according to the present invention, there is provided a method for processing a medical glass product in which generation of particles is minimized during cutting.

FIG. 1

EP 3 882 225 A1

## Description

[Technical field]

The present invention relates to an apparatus and a method for damaging a cutting part of a medical glass product, and more specifically, to an apparatus and a method for damaging a cutting part of a medical glass product, for example, an ampoule using glass as a material or a glass tube for a medical device, by using an Ultrafast Laser to minimize the generation of glass fragments.

[Background Art]

The present invention relates to a method for damaging a cutting part such as a medical glass product, for example, a glass ampoule for storing an injection solution or a nutritional supplement, or a medical glass tube.

Medical glass products, such as glass ampoules for storing injectables or nutritional supplements, are made in such a way that the contents of the injectables and nutritional supplements can enter the human body. Therefore, it is essential to make them completely sterile/dust-free in the process of breaking apart the glass container or tube during use. Therefore, careful attention and considerable attention are required in the manufacturing process.

However, in the manufacturing process of conventional medical glass products, there is always a possibility that foreign substances such as glass fragments enter the ampoule. For example, an OPC ampoule used as a container for an injection or nutritional supplement is an ampoule designed to minimize the generation of glass fragments, but even with normal use, fine glass fragments will be generated when the user forces the ampoule by hand.

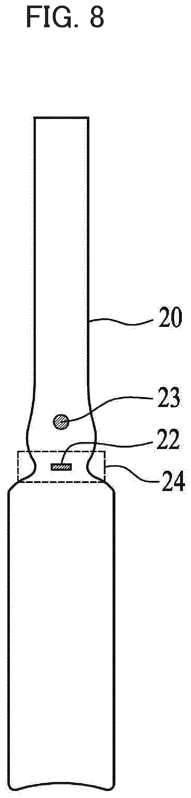

For example, with reference to FIG. 8, which shows a prior art injectable or nutritional supplement ampoule 20, the prior art or nutritional supplement ampoule 20 includes a cutting direction indicator 23, a cutting aid notch 22, and a bottleneck 24.

In this case, the conventional ampoule 20 for injection or nutritional supplement has the cutting aid notch 22 formed at the cutting part of the neck (bottleneck 24) of the ampoule by the diamond blade rotating at high speed. In order to facilitate cutting, a bottleneck portion having a cut part smaller in diameter than the periphery is provided, and a user cuts the ampoule by hand by applying pressure to a portion displayed on the cutting direction indicator 23. The cutting aid notch 22 is then folded open so that an injection or nutritional supplement within the ampoule can be used.

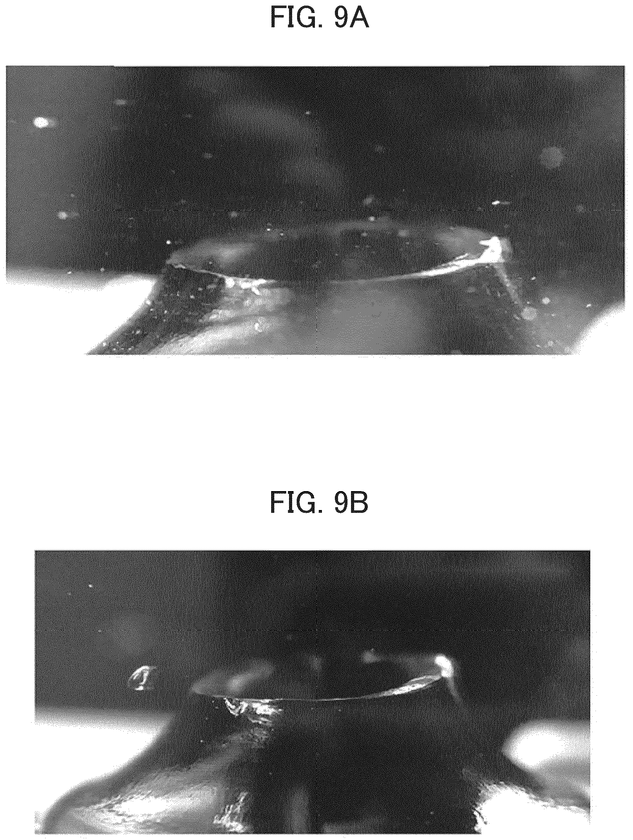

FIGS. 9A and 9B are photographs of a cut part of a glass ampoule taken at a high speed when a user manually opens the glass ampoule in which the cutting aid notch 22 is formed by a conventional technique. In FIG. 9A, it is seen that glass dust is scattered even though the glass ampoule is normally opened. Further, referring to FIG. 9B, it is seen that a large glass fragment is generated.

At this time, fine glass powder produced when a user (For example, a nurse) cuts the cut part of the ampoule for injection or drinking with an injection solution or a nutritional supplement put in the OPC ampoule can enter the ampoule.

In order to solve the problem that fine glass dust can be generated when a notch for assisting cutting is processed through a diamond blade, a method for generating fine gaps by a laser (Japanese Unexamined Patent Application Publication No. H11 -71124) has been devised. However, since such a method is also a method for forming a groove in a part of the region from the glass surface of the ampoule, there is a disadvantage that a large glass fragment can be generated when a user applies a force in the wrong direction.

Thus, the generation of glass fragments can be significantly increased when not used properly (For example, when a user applies a force in a direction different from the direction displayed on the cutting direction indicator 23). That is, although the OPC ampoule 20 is made so as to provide directionality so as not to generate fragments when the glass is cut, if a force is applied in a different direction without applying a force in the indicated direction, more glass fragments are generated.

Since such glass fragments and glass powder can cause serious damage to the human body if they enter the human body, in particular, users of the injection solution do not use all the injection solution but use the injection solution except for the part where the glass powder sinks.

Accordingly, there is an urgent need for a method of manufacturing a medical glass product that can prevent waste of such medical drugs or nutritional supplements, eliminate the possibility of foreign matter flowing into the ampoule, and provide a completely dust-free medical glass product process in order to remove glass fragments and dust harmful to the human body.

[Citation List]

[Patent Literature]

[PTL1] Japanese Unexamined Patent Application Publication No. H11-71124

[Summary of Invention]

To provide a completely dust-free medical glass product damage processing process by removing a source from which foreign matter flows into an ampoule during the manufacturing process of the medical glass product.

Therefore, according to the present invention, there is provided a method for processing a medical glass product in which generation of particles is minimized during cutting.

On the other hand, another object of the present invention is to provide a method for producing an ampoule for injection or a nutritional supplement, which is produced as described above, and hardly generates particles even when the ampoule for injection or nutritional supplement is cut in any direction, even if the cutting direction is not indicated on the ampoule, and to provide the ampoule for injection.

Still another object of the present invention is to provide a method for producing an ampoule for an injection or a nutritional supplement, which can significantly reduce the process time and defects required for producing a bottleneck without the need to produce a bottleneck portion when producing an ampoule for an injection or a nutritional supplement, and to provide an ampoule for an injection or a nutritional supplement.

In order to solve the above-described problems, the cutting part damage apparatus of the medical glass product according to one embodiment of the present disclosure provides a laser light source for bursting an ultra-fast laser beam.; a beam profile forming section such that the ultra-fast laser beam has a plurality of focal lengths and is shaped to have an elongated profile; a beam irradiation section irradiates the glass of the medical glass product so that the profile of the shaped ultra-fast laser beam is formed inside the glass of the medical glass product to form inside damage formed by internal defects due to bulk deformation inside the glass of the medical glass product; and a rotating section for rotating the medical glass product at a predetermined rotational speed.

At this time, the cutting part damage apparatus of the medical glass product can further include a control unit for controlling the predetermined rotation speed and the burst speed of the laser beam so that a plurality of inside damages are formed at the cutting part of the medical glass product.

The inside damage can be formed in the thickness direction of the glass along the circumference of the medical glass product.

The medical glass product may also include any one of ampoules for injection or nutritional supplements, blood collection tubes, syringes, cartridges, glass medicine bottles, and glass tubes for medical devices.

Therefore, according to the present invention, there can be provided a method for processing a medical glass product in which generation of particles is minimized during cutting.

On the other hand, in the case of the ampoule for injection according to the embodiment of the present invention, a cutting error can be reduced when the ampoule is used. That is, even if the cutting direction is not displayed on the ampoule, since there is hardly any generation of particles even if the ampoule is cut in any direction, the cutting error in using the ampoule can be remarkably reduced.

Further, in the manufacture of the ampoule for injection, since it is not necessary to manufacture the bottleneck part by adding a process, the process time and defects required for manufacturing the bottleneck are remarkably reduced.

The effects of the present invention are not limited to those exemplified above, and various effects are included herein.

[Brief description of drawings]

FIG. 1 is a block diagram of a cutting part damage apparatus for a medical glass product according to an embodiment of the present invention.

FIG. 2 is a view (part 1) for explaining a laser beam which has a plurality of focal lengths by self-diffraction of an axicon lens according to an embodiment of the present invention.

FIG. 3 is a diagram (part 2) for explaining a laser beam which has a plurality of focal lengths by self-diffraction of an axicon lens according to an embodiment of the present invention.

FIG. 4 is a view (part 3) for describing a laser beam having a plurality of focal lengths by self-diffraction of an axicon lens according to an embodiment of the present invention.

FIG. 5 illustrates the glass thickness direction of an ampoule of the medical glass product according to an embodiment of the present invention.

FIG. 6A to 6C are a diagrams illustrating the medical glass product produced according to an embodiment of the present invention.

FIG. 7A and 7B are diagrams illustrating a medical glass product produced according to an embodiment of the present invention.

FIG. 8 shows a prior art ampoule for injection or nutritional supplement.

FIG 9A is a high speed photograph at open of an ampoule made by the prior art.

FIG. 9B shows a high speed photograph at open of an ampoule made by the prior art.

[Description of Embodiments]

The following content merely exemplifies the principle of the invention. Therefore, those skilled in the art, although not expressly described or illustrated herein, can invent various devices that embody the principles of the invention and are within the concepts and scope of the invention. It should also be understood that, in principle, all conditional terms and examples listed herein are expressly intended only for the purpose of enabling the concept of the invention to be understood and are not limited to such specifically enumerated examples and states.

Also, in the following description, it should be understood that the preface expressions such as the first, second, and the like are used to describe mutually equivalent and independent objects, and that there is no meaning in the order of main/sub or master/slave.

The foregoing objects, features and advantages will become more apparent through the following detailed description in connection with the accompanying drawings, whereby a person with ordinary knowledge in the field of the art to which the invention pertains can readily practice the technical ideas of the invention.

The respective features of the various embodiments of the invention may be coupled or combined with each other in part or in whole, may be technically interlocked and driven in a variety of ways to be fully understood by those skilled in the art, may be practiced independently of each other, and may be practiced together in related relationships.

Various embodiments of the present invention will now be described in detail with reference to the accompanying drawings.

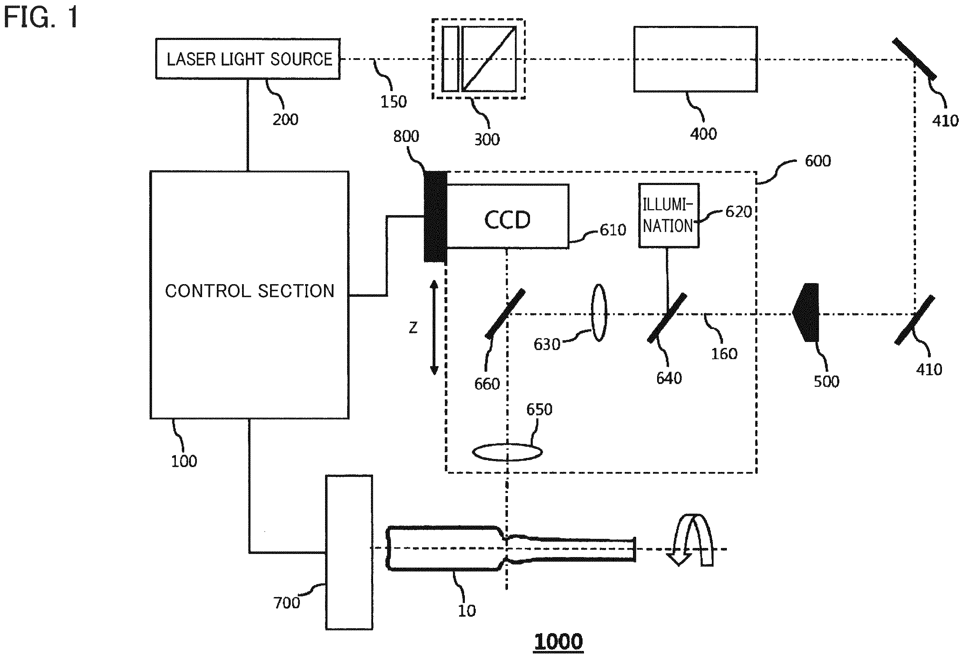

FIG. 1 is a block diagram of a cutting part damage apparatus 1000 for a medical glass product according to an embodiment of the present invention. According to FIG. 1, the cutting part damage apparatus of the glass product may include a control section 100, a laser light source 200, an energy control module 300, a beam expander 400, a beam profile forming section 500, a beam irradiation section 600, a rotating section 700, and a distance adjusting section 800. Here, the medical glass product means a medical glass product which has a cut surface processed with glass while including a portion in the form of a tube, such as an ampoule for injection or a nutritional supplement, a blood collection tube, a syringe, a cartridge, a glass medicine bottle, etc., and which should not contain glass fragments or glass dust inside.

As the material of the glass product, soda lime, quartz, borosilicate glass and the like are used. Particularly in the case of a medical glass container, borosilicate glass is preferable.

The control section 100 can control the energy of a laser beam 150, the distance between the workpiece (medical glass product) 10 and the beam irradiation section 600, and the rotational speed of the rotating section 700. The magnification can be adjusted through control for adjusting the distance between a first condenser lens 630 and a second condenser lens 650. The control section 100 can control the burst number of the laser beam 150 according to the rotational speed of the rotating section 700.

The laser light source 200 generates and irradiates an ultra-fast laser beam 150.

The energy control module 300 and the beam expander 400, are configured to adjust the energy amount and the size of the laser beam reaching the workpiece 10. In this case, an optical mechanism such as a plurality of mirrors 410 may be further provided to allow the laser beam generated by the laser light source to reach the beam profile forming section 500 and the beam irradiation section 600.

The beam profile forming section 500 is configured to form a profile of a laser beam having a plurality of focal lengths by self-diffraction of an axicon lens, and preferably, an axicon lens is used.

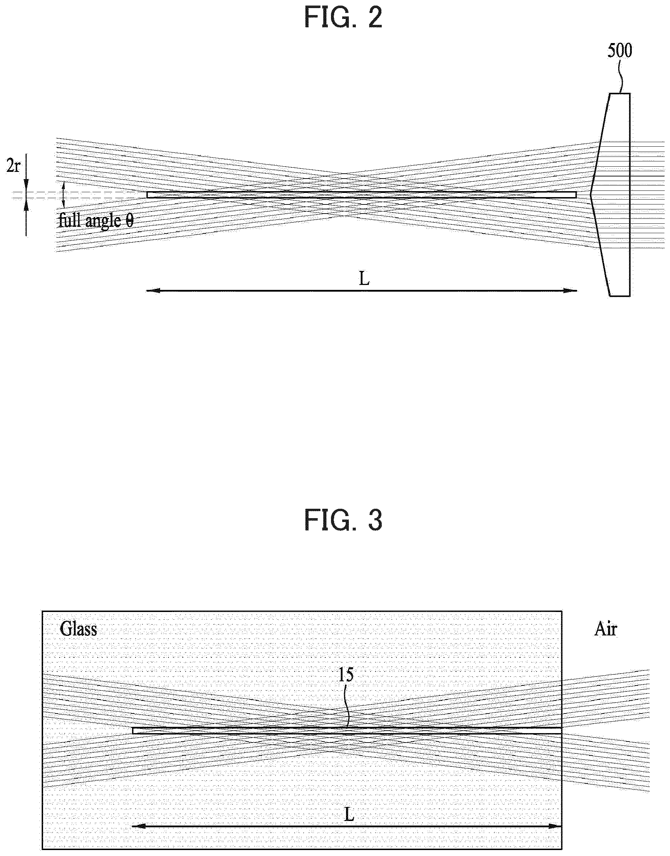

As shown in FIG. 2, a laser beam which becomes a plurality of focal lengths by self-diffraction of an axicon lens is generally formed through interference of a laser beam which has passed through a conical lens, e.g., an axicon lens 500. At this time, the wave front of the laser beam is formed by diffraction of the Gaussian beam passing through the axicon lens. Interference fringes are long and consist of central cores of microunit diameter and a number of rings surrounding these cores with relatively low intensity. That is, according to an embodiment of the present invention, the beam profile forming section 500 is shaped such that the ultra-fast laser beam has a plurality of focal lengths and a high aspect ratio profile of an elongated form.

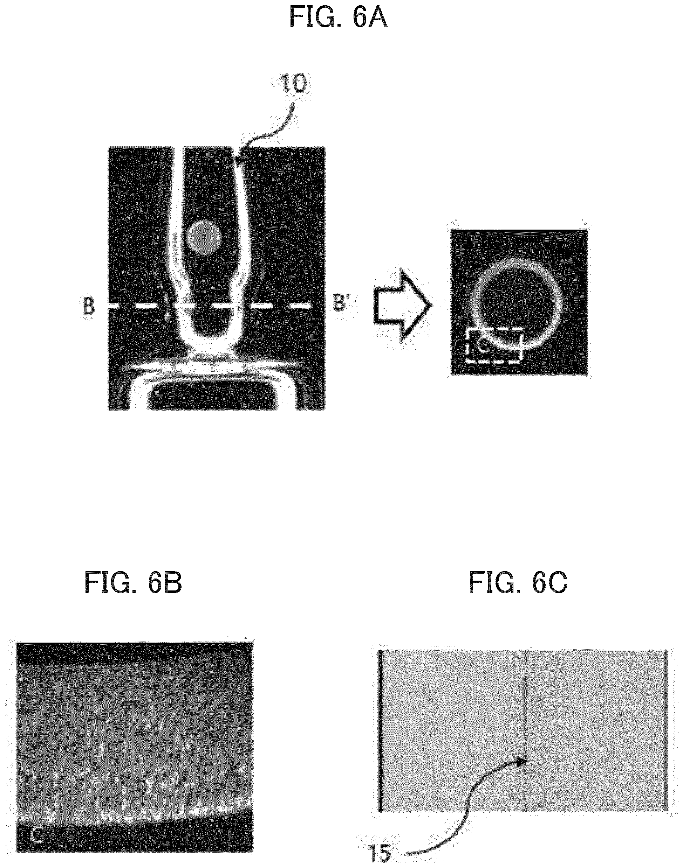

In this case, the laser beam is partially absorbed while passing through the glass of the workpiece 10 to transmit energy to the constituent molecules of the glass, and at this time, the absorbed energy density is high and plasma is instantaneously formed inside the glass of the workpiece 10. Referring to FIG. 3, the plasma described above will cause internal defects due to high aspect ratio bulk deformation to form within the glass of workpiece 10. The internal defect formed by the laser beam is referred to herein as damage, the process for forming damage is referred to as damage processing, and the structure for assisting the cutting of the medical glass product by forming damage is referred to as inside damage 15 (Inside damage, see FIGS. 3 and 6).

In embodiments of the present invention, a process of continuously forming damage with a laser beam is utilized to form a structure that replaces a cutting aid notch with a prior art diamond blade. In addition, methods and apparatus for cutting medical glass products by inside damage formation are also within the scope of the present invention.

In this case, the central core radius (r) of the laser beam having a plurality of focal lengths by the self-diffraction of the axicon lens can be expressed by the following equation 1 (The part shown in FIG. 2 is the diameter, indicated by 2r.).

[Equation 1]

$$r \sim \frac{2.4\lambda}{2\pi \sin\left(\frac{\theta}{2}\right)}$$

where θ is the angle between two diffracted wave vectors formed by the axicon lens (See FIG. 2). Such an angle is determined by the axicon parameter (For example, the axicon parameter includes the angle of the vertex of the axicon lens and the optical index of refraction). Further, the length (L) of the laser beam which becomes to have a plurality of focal lengths by self-diffraction of an axicon lens called depth of focus from a geometrical point of view can be calculated by the following equation 2.

[Equation 2]

$$L \sim \frac{w}{2\tan\left(\dfrac{\theta}{2}\right)}$$

where w is the diameter of the laser beam 150 incident on the axicon lens.

In this case, the shape of the laser beam, which becomes multi-focal length by self-diffraction of the axicon lens, is designed to elongate along the thickness of the glass and to produce uniform inside damage. Here, the term "elongated " means a case where the length (L) of the inside damage to be processed into the glass of the workpiece 10 is very large than the radius (R) of the inside damage, and the length (L) of the inside damage is 10 times or more the radius (R) of the inside damage.

The beam irradiation section 600 can include optical mechanisms 630, 650 for allowing a laser beam deformed to have an elongated profile at the beam profile forming section 500 to be incident on the glass portion of the workpiece 10, a coaxial CCD camera 610 for confirming accurate incidence, and an episcopic illumination 620. Beam splitters 640 and 660 may then be included to align the coaxial CCD camera 610 and the episcopic illumination 620 with a laser beam 160.

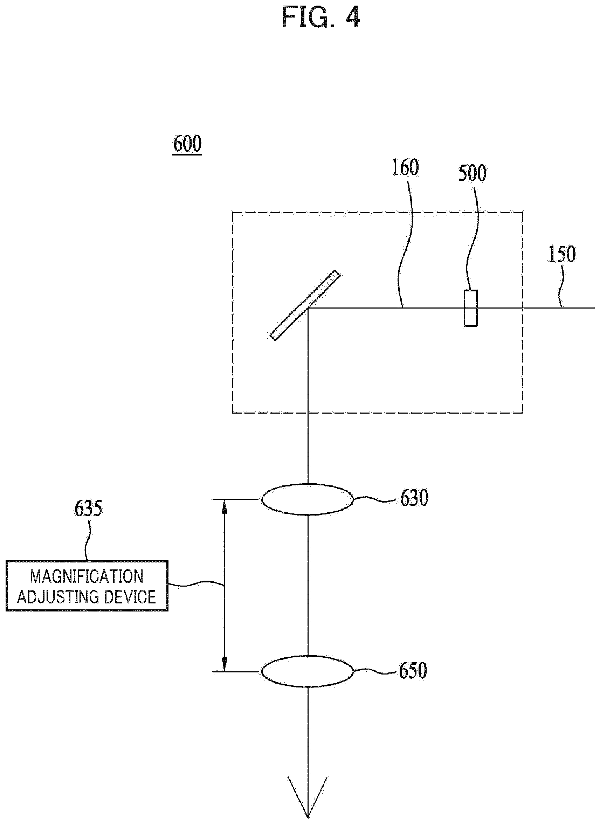

In this case, the beam irradiation section 600 can control the laser beam so as to form locally concentrated energy in the glass material of the workpiece 10 including the first condenser lens 630, the second condenser lens 650 and the magnification adjusting device 635 (See FIG. 4). Thus, the deformed laser beam 160 is imaged to cause bulk deformation at a reduced rate through the first condenser lens 630 and the second condenser lens 650.

The wavelength of the laser beam used in this embodiment is in the range of 1030 ~ 1070 nm, and the focal position is such that the starting point of the laser beam, which becomes to have a plurality of focal lengths by the self-diffraction of the axicon lens, can be formed inside the glass product in the thickness direction of the glass from the glass surface of the workpiece.

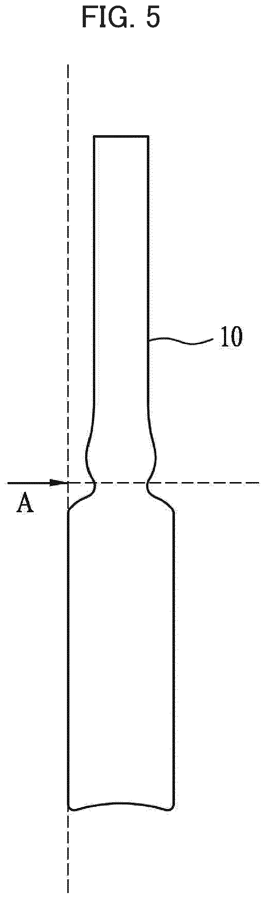

On the other hand, the rotating section 700 is configured to rotate the workpiece 10 in order to form the inside damage 15 in the thickness direction of the glass along the circumference of the workpiece 10. In this case, the thickness direction of the glass means a direction perpendicular to the glass surface of the workpiece 10 (See direction A in FIG. 5). In this case, the control section 100 determines the interval between the inside damage depending on the rotation speed and the burst time of the laser beam. The control section 100 can control the energy of the laser beam provided in the thickness direction of the glass by controlling the burst numbers. The burst number means the number of pulses included in one burst.

On the other hand, the distance adjusting section 800 adjusts the distance between the workpiece 10 and the beam irradiation section 600 so that the laser beam having a plurality of focal lengths by the self-diffraction of the axicon lens can be accurately imaged inside the glass of the workpiece 10.

FIGS. 6A to 6C are diagrams for explaining the inside damage formed in the circumferential direction while rotating the workpiece 10 by the rotating section 700.

FIG. 6A is a view showing a part of the workpiece 10, FIG. 6B is a view showing a cross section of the B-B' portion of FIG. 6A, and FIG. 6C is a view in which the inside damage 15 of FIG. 6B is actually embodied and photographed.

As shown in FIGS. 6B and 6C, it can be seen that the inside damage 15 is formed in the thickness direction of the glass along the circumferential surface of the cut part of the workpiece 10, for example, the injection ampoule, by the laser beam having a plurality of focal lengths by the self-diffraction of the axicon lens formed by the beam profile forming section 500.

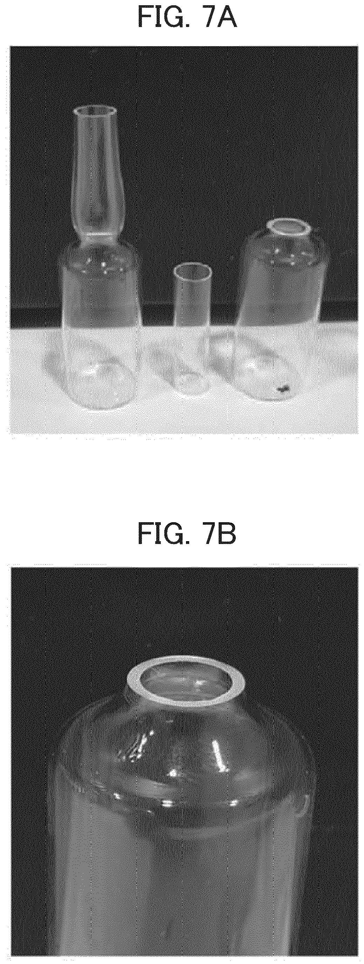

FIGS. 7A and 7B are diagrams for explaining an embodiment and an effect according to an embodiment of the present invention.

In FIGS. 7A and 7B, while the injection ampoule was rotated as the workpiece 10, inside damage having a diameter of 2 ~ 4 μm was formed. The length (L) of the laser beam having a plurality of focal lengths by the self-diffraction of the axicon lens was processed to approximately the thickness of the glass. In this case, the circumference of the ampoule was about 4 mm, the laser used had a wavelength of 1030 nm to 1070 nm, and the pulse energy was embodied as 80 uJ or greater. The ultra-fast laser beam was burst at a speed of 1000 Khz or more.

When processed under the above conditions, as shown in FIGS. 7A and 7B, the cut surface of the ampoule for injection was reproduced in a form similar to that of the polished surface (2 ~ 3 μm), and no change in the modification of the cross section or crack occurred.

According to the present invention, therefore, a completely dust-free medical glass product process is provided by removing a source of foreign matter flowing into the ampoule during the manufacturing process of the medical glass product.

According to the present invention, there is provided a method for processing a medical glass product in which generation of particles is minimized during cutting.

On the other hand, in the case of the ampoule for injection according to the embodiment of the present invention, a cutting error can be reduced when the ampoule is used. That is, even if the cutting direction is not displayed on the ampoule, since there is hardly any generation of particles even if the ampoule is cut in any direction, the cutting error in using the ampoule can be remarkably reduced.

Further, in the manufacture of the ampoule for injection, since it is not necessary to manufacture the bottleneck part by adding a process, the process time and defects required for manufacturing the bottleneck are remarkably reduced.

Although the embodiments of the present invention have been described in more detail with reference to the accompanying drawings, the present invention is not necessarily limited to such embodiments and may be variously modified within the scope of the technical concept of the present invention. Accordingly, the embodiments disclosed in the present invention are not intended to limit the technical idea of the present invention, but are intended to explain, and the scope of the technical idea of the present invention is not limited by such embodiments. Therefore, it should be understood that the embodiments described above are illustrative in all respects and are not limiting. The scope of protection of the present invention should be construed according to the following claims, and all technical ideas within the scope thereof should be construed as being within the scope of the present invention.

[Description of Signs]

| 100 | Control section |
| 200 | Laser light source |
| 300 | Energy control module |
| 400 | Beam expander |
| 500 | Beam profile forming section |
| 600 | Beam irradiation section |
| 630, 650 | First and second condenser lenses |
| 700 | rotating section |
| 800 | Distance adjusting section |

**Claims**

1. A cutting part damage apparatus for a medical glass product, comprising:

    a laser light source for bursting ultra-fast laser beam;
    a beam profile forming section such that the ultra-fast laser beam has a plurality of focal lengths and is shaped to have an elongated profile;
    a beam irradiation section for irradiating the glass of the medical glass product so that the profile of the shaped ultra-fast laser beam is formed inside the glass of the medical glass product to form inside damage formed by internal defects due to bulk deformation inside the glass of the medical glass product.; and
    a rotating section for rotating the medical glass product at a predetermined rotational speed so that a plurality of the inside damage are formed along the circumference of the medical glass product.

2. The cutting part damage apparatus according to claim 1, further comprising a control section for controlling the predetermined rotational speed and a burst number of the laser beam so that a plurality of the inside damages are formed at the cut part of the medical glass product.

3. The cutting part damage apparatus according to claim 1, wherein the inside damage is formed in the thickness direction of the glass along the circumference of the medical glass product.

4. The cutting part damage apparatus according to claim 1, wherein the medical glass product is any one of ampoules for injection or nutritional supplement, blood collection tubes, syringes, cartridges, glass medicine bottles, and glass tubes for medical devices.

5. A method for damaging cutting part of medical glass product, comprising the steps of:

    bursting an ultra-fast laser beam;
    shaping the ultra-fast laser beam to have a plurality of focal lengths and to have an elongated profile;
    forming inside damage formed by internal defects due to bulk deformation inside the glass of the medical glass product so that the profile of the shaped ultra-fast laser beam is irradiated to be formed inside the glass of the medical glass product; and
    rotating the medical glass product at a predetermined rotational speed.

6. The method for damaging cutting part of medical glass product according to claim 5, further comprising the step of controlling the predetermined rotational speed and a burst number of the laser beam so that a plurality of the inside damages are formed at the cut part of the medical glass product.

7. The method for damaging cutting part of medical glass product according to claim 5, wherein the inside damage is formed in the thickness direction of the glass along the circumference of the medical glass product.

8. The method for damaging cutting part of medical glass product according to claim 5, wherein the medical glass product is any one of ampoules for injection or nutritional supplement, blood collection tubes, syringes, cartridges, glass medicine bottles, and glass tubes for medical devices.

FIG. 1

EP 3 882 225 A1

# FIG. 2

# FIG. 3

# FIG. 4

<u>600</u>

160

500

150

635

MAGNIFICATION ADJUSTING DEVICE

630

650

# FIG. 5

10

A

# FIG. 6A

# FIG. 6B

# FIG. 6C

# FIG. 7A

# FIG. 7B

# FIG. 8

## FIG. 9A

## FIG. 9B

**INTERNATIONAL SEARCH REPORT**

| International application No. |
| --- |
| PCT/JP2019/049560 |

| A. CLASSIFICATION OF SUBJECT MATTER |
| --- |
| Int.Cl. C03C23/00(2006.01)i, C03B33/095(2006.01)i |
| FI: C03C23/00D, C03B33/095 |

According to International Patent Classification (IPC) or to both national classification and IPC

| B. FIELDS SEARCHED |
| --- |
| Minimum documentation searched (classification system followed by classification symbols) |
| Int.Cl. C03B33/06-33/095, C03C23/00, A61J1/06, A61M5/28, B23K26/00-26/70 |

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

| C. DOCUMENTS CONSIDERED TO BE RELEVANT |  |  |
| --- | --- | --- |
| Category* | Citation of document, with indication, where appropriate, of the relevant passages | Relevant to claim No. |
| X<br>Y | WO 2017/38869 A1 (ASAHI GLASS CO., LTD.)<br>09.03.2017 (2017-03-09), paragraphs [0002],<br>[0035], [0036], [0042]-[0046], [0055], [0060],<br>[0061], [0092], [0246], [0247] | 1-7<br>1-8 |
| X<br>Y | US 2015/0140241 A1 (HOSSEINI) 21.05.2015 (2015-05-<br>21), paragraphs [0041], [0045], [0066]-[0071],<br>[0113], [0114], fig. 6-8, 17, 17A | 1-8<br>1-8 |
| Y | JP 63-222765 A (FUJISAWA PHARMACEUTICAL CO., LTD.)<br>16.09.1988 (1988-09-16), page 3, upper left<br>column, line 8 to upper right column, line 7, fig.<br>5, 6 | 1-8 |
| Y | JP 2018-2501 A (MITSUBOSHI DIAMOND INDUSTRIAL CO.,<br>LTD.) 11.01.2018 (2018-01-11), paragraphs [0015]-<br>[0024], fig. 2 | 1-8 |

☐ Further documents are listed in the continuation of Box C. ☒ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 14.02.2020 | 03.03.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application No. |
| --- |
| PCT/JP2019/049560 |

```
WO 2017/38869 A1      09.03.2017     US 2018/0186680 A1
                                     paragraphs [0003], [0094], [0095],
                                     [0101]-[0105], [0114],
                                     [0119], [0120], [0154],
                                     [0311], [0312]
                                     EP 3345878 A1
                                     CN 108025965 A

US 2015/0140241 A1    21.05.2015     (Family: none)

JP 63-222765 A        16.09.1988     (Family: none)

JP 2018-2501 A        11.01.2018     (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1171124 A